# EUROPEAN PATENT APPLICATION

(11) **EP 0 562 409 A1**
(43) Date of publication of application: **29.09.1993**
(21) Application number: 93104201.4
(22) Date of filing: 16.03.1993
(51) Int. Cl.: H04N 9/78, H04N 9/64

(54) **Circuit for suppressing the SECAM color carrier in a television receiver**

(30) Priority: 25.03.1992 EP 92400815
(71) Applicant: THOMSON multimedia, 92400 Courbevoie (FR)
(72) Inventor: Cheong, Yew Honn, No.24-279 Singapore 0512 (SG)
(74) Representative: Einsel, Robert, Dipl.-Ing.

(57) **Abstract**

A circuit used up to now in connection with IC TEA5640C has been modified by using new IC TEA5640F. Said modified circuit was not suitable for switching of color trap. It is an object to provide a simple circuit for switching SECAM color trap when IC TEA5640F is used instead of TEA5640C.

An output pin (26) of IC TEA5640F is connected via an amplitude threshold circuit and an integrating network to the control electrode of switch actuating said color trap.

Especially for PAL/SECAM-Multinorm color television receiver.

## Description

The invention relates to a circuit according to the improductary part of claim 1. Within a color television receiver there is generally provided within the luminance path a trap including a series connection of a coil and a capacitor for suppressing the color carrier in order that said color carrier does not become visable on the picture screen. On the other hand within the path of the luminance signal there is provided at delay line for accommodating the transit time of the luminance signal to that path of the color signals. Said delay line already has included a color trap for the PAL color carrier. For SECAM operation an separated color trap therefore is required, because the frequency of the SECAM color carrier is different from that of the PAL color carrier. Said SECAM color trap should only switch on in SECAM mode.

It is an object of the invention to provide a simple circuit for switching said SECAM color trap in case chroma IC TEA5640F is used. This object is solved by the features of claim 1. Advantageous embodiments of the invention are described within the subclaims.

Up to now pin 26 of IC TEA5640F was only used for system identification e.g . for switching a capacitor at the V-IDENT pin 11 of said IC. According to the invention said SECAM ident-pin 26 is additionally used for switching said color trap. It has been found out that by using said pin 26, a very simple and reliable circuit is provided which ensures a very reliable switching between PAL and SECAM mode.

Two examples of the invention are now described by way of the drawing. Within the drawing
- Fig. 1: shows a first embodiment of the invention and
- Fig. 2: a modification of the circuit according to Fig.1.

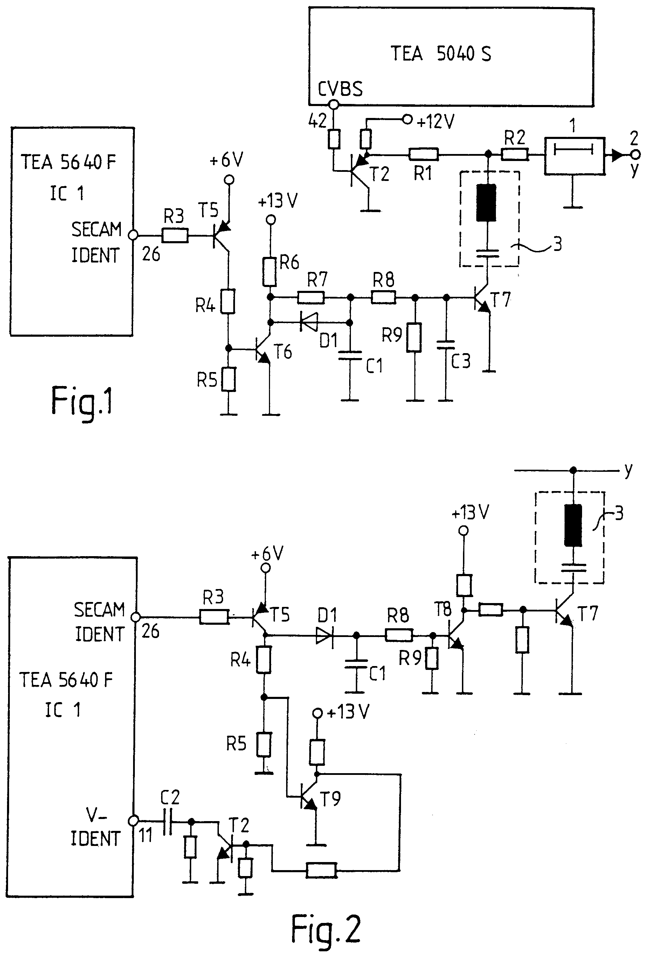

In Fig. 1 IC TEA5040S provides at pin 42 the combined CVBS signal which is fed via a transistor T2, resistor R1 and a resistor R2 to luminance delay line 1 furnishing at terminal 2 the luminance signal Y wherein the color carrier C is suppressed. For PAL mode said delay line 1 includes color trap tuned to PAL color carrier frequency. For SECAM mode an additional external trap 3 is provided including a series connection of a coil and a capacitor tuned to a SECAM color carrier frequency. A chroma IC TEA5640F has SECAM an ident- pin 26. Voltage at pin 26 is dependent from whether PAL signal or SECAM signal is detected. During PAL signal voltage at pin 26 has a lower value and during SECAM signal a higher value. In the following the operation of the circuit according to Fig.1 is explained.

During SECAM mode voltage at pin 26 has a high value so that via resistor R3, transistor T5 is turned off. As there is no current in resistors R4, R5, transistor T6 is also turned off. Capacitor C1 will be charged to a +13 V via resistors R6 and R7 so that via resistors R8 and R9 a transistor T7 is turned on. That means that a color trap 3 is activated and switched to the path of the luminance signal for suppressing color carrier C within the combined signal CVBS.

During PAL mode voltage at pin 26 has a lower value so that T5 and T6 are both turned on. Now capacitor C1 discharges via D1 and R7 and T6. Voltage at base of T7 decreases so that T7 is turned off and color trap 3 is inactivated as desired for PAL mode.

A RC time constant provided by R7 and C1 is required because, when the signal has no burst in chroma content (black and white picture), the chroma IC1 switches between PAL mode and SECAM mode at the time interval of about 250 ms. If this is not filtered, the picture will flicker due to the switching of the SECAM color trap.

Fig. 2 shows another version of the circuit as shown in Fig. 1. Switching of the color trap 3 is effected in the same way as in between C1, C7 a further tansistor T8 is inserted. Voltage at R5 which is dependent whether there is PAL mode or SECAM mode is additionally fed via transistor T9 to a base of transistor T2 which is used for a connecting capacitor C2 to V-IDENT pin 11 of IC 1. During SECAM mode voltage at R5 is low so that T9 is turned off and T2 turned on by +13 V. During PAL mode T5 is switched on. C1 is immediately charged up via D1 and T5 so that T8 is turned on and T7 is not able to turn on so that color trap 3 is not activated. During SECAM mode T5 is switched off. C1 discharges slowly via R8 and R9. When voltage at base of T8 is slow enough, T8 is switched off so that by +13 V, T7 is switched on and color trap 3 is activated as needed during SECAM Mode.

## Claims

1. Circuit for suppressing the SECAM color carrier in a television receiver wherein a series connection of a trap (3) tuned to color carrier frequency and of an electronic switch (T7) is connected to the luminance path, the receiver including a chroma IC e.g. of the type TEA5640F having a SECAM IDENT output pin (26), **characterized in** that said output pin (26) is connected via an amplitude threshold circuit (T5-T7) and an integrating network (R7,C1) to the control electrode of said switch (T7).

2. Circuit according to claim 1, **characterized in** that said output pin (26) is connected to the base of a transistor (T5,T6) having its collector connected via a diode (D1) to a capacitor (C1) said capacitor (C1) being connected to the control electrode of said switch (T7).

3. Circuit according to claim 2, **characterized in** that said capacitor (C1) is connected to the control electrode of said switch (T7) via a RC network.

4. Circuit according to claim 1, **charachterized in** that said output pin (26) is also connected to a V-IDENT pin (11) of said IC.
